# FASCICULE DE BREVET EUROPEEN

(11) **EP 2 134 760 B1**
(45) Date de publication et mention de la délivrance du brevet: **26.09.2018**
(21) Numéro de dépôt: 08718145.9
(22) Date de dépôt: 21.03.2008
(51) Int. Cl.: C08G 18/08, C08G 18/28, C08G 18/79, C08G 18/80, C08G 71/04, C09D 175/04, C07C 43/30

(54) **COMPOSITION A BASE DE (POLY)ISOCYANATE MODIFIE ET D'UN SOLVANT DE TYPE ACETAL OU CETONE ALIPHATIQUE, ET UTILISATION DE CETTE COMPOSITION POUR LA FABRICATION DE REVETEMENTS**
ZUSAMMENSETZUNG, ENTHALTEND EIN MODIFIZIERTES (POLY)ISOCYANAT UND EIN LÖSUNGSMITTEL VOM TYP ACETAL ODER ALIPHATISCHES KETON, UND VERWENDUNG DER ZUSAMMENSETZUNG ZUR HERSTELLUNG VON ÜBERZÜGEN
COMPOSITION CONTAINING A MODIFIED (POLY)ISOCYANATE AND A SOLVENT OF THE ACETAL OR ALIPHATIC KETONE TYPE, AND USE OF SAID COMPOSITION FOR PRODUCING COATINGS

(30) Priorité: 27.03.2007 FR 0702200; 26.07.2007 FR 0705472
(43) Date de publication de la demande: 23.12.2009
(73) Titulaire: Vencorex France, 69800 Saint-Priest (FR)
(72) Inventeur: BERNARD, Jean-Marie, F-69440 Saint Laurent D'agny (FR); JOMIER, Aurore, F-69006 Lyon (FR)
(74) Mandataire: Dennemeyer & Associates S.A.
(86) Numéro de dépôt international: PCT/EP2008/053446
(87) Numéro de publication internationale: WO 2008/125419

(56) Documents cités:
- EP-A- 1 382 626
- EP-A1- 1 279 520
- US-A1- 2003 064 227

## Description

La présente invention concerne une composition à base de (poly)isocyanate modifié comprenant un (poly)isocyanate modifié et au moins un solvant. L'invention concerne également l'utilisation de cette composition pour la préparation de revêtements tels que peintures ou vernis.

On sait que l'on utilise largement dans le domaine des peintures et des vernis des diisocyanates, notamment les alcoylènes diisocyanates et leurs dérivés de type biuret ou leurs trimères.

Jusqu'à une date récente, ces produits étaient généralement utilisés en solution dans des solvants organiques. Aujourd'hui, étant donnée la toxicité de certains solvants organiques, on essaie de développer également des techniques qui ne mettent en oeuvre que peu de solvant, voire qui soient sans solvant. Ainsi des compositions à base de polyisocyanate à la fois facilement émulsionnables et facilement utilisables en émulsion dans l'eau ont été mises au point. L'eau sert dans ce cas de véhicule aux composants de la formulation et permet de réduire la teneur en solvants organiques dans celle-ci. De plus, de telles compositions permettent le rinçage à l'eau du matériel utilisé pour leur application.

Par ailleurs, pour la préparation des polyuréthannes qui sont utilisés comme revêtements en tout genre, notamment ceux sur les textiles, les verres, les papiers, les métaux, les matériaux de construction et les peintures, et qui sont généralement obtenus par réaction de polyisocyanates avec des co-réactifs nucléophiles particuliers, on cherche à développer des alternatives à la chimie des isocyanates en raison notamment du caractère irritant, voire toxique des isocyanates monomères.

À cet effet il est connu d'utiliser des (poly)isocyanates modifiés comprenant au moins une fonction isocyanate modifiée par un groupe ayant une fonctionnalité réticulante, tel qu'un groupe carbonate cyclique. Ces (poly)isocyanates modifiés sont ensuite condensés et réticulés par réaction avec des co-réactifs nucléophiles appropriés (par exemple des aminés), pour former des polyuréthannes.

Il est souhaitable, afin que ces (poly)isocyanates modifiés soient aisément véhiculables et manipulables, ou pour diminuer leur viscosité de manière à pouvoir les pulvériser plus facilement, de les formuler dans un solvant, par exemple par solubilisation. Or il a été observé que ces (poly)isocyanates modifiés, en particulier les dérivés de l'hexaméthylène diisocyanate, sont difficilement solubles dans les solvants classiquement utilisés pour formuler des dérivés polyisocyanates tels que l'acétate de n-butyle, les composés alkyles aromatiques tels que le Solvesso 100®.

La présente demande décrit une composition à base de (poly)isocyanate modifié comprenant :
- au moins un (poly)isocyanate modifié de formule (I) suivante : 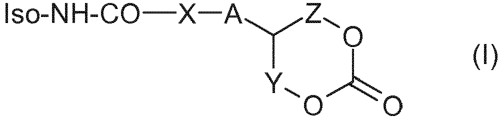 où :
   - Iso est le reste d'un (poly)isocyanate (après transformation d'une fonction isocyanate) ;
   - X représente un atome ou un groupement d'atomes ayant réagi avec la fonction isocyanate ;
   - A représente une liaison covalente simple ou une chaîne hydrocarbonée linéaire, ramifiée, ou cyclique, comprenant de 1 à 30, avantageusement de 1 à 18, et de préférence de 1 à 5 atomes de carbone ;
   - Y représente une liaison covalente simple ou une chaîne hydrocarbonée telle que définie pour A ;
   - Z représente une liaison covalente simple ou une chaîne hydrocarbonée telle que définie pour A ;
   sous réserve que les groupes Z et Y ne représentent pas simultanément une liaison ;
   - A et Y, lorsque l'un et/ou l'autre ne représente(nt) pas une liaison, peuvent être reliés par l'intermédiaire d'un radical divalent -Q-, où Q représente une chaîne hydrocarbonée linéaire, ramifiée ou cyclique, comprenant de 1 à 30, avantageusement de 1 à 18, et de préférence de 1 à 5 atomes de carbone ;
   - Y et Z, lorsque l'un et/ou l'autre ne représente(nt) pas une liaison, peuvent être reliés par l'intermédiaire d'un radical divalent -W-, où W représente une chaîne hydrocarbonée linéaire, ramifiée ou cyclique, comprenant de 1 à 30, avantageusement de 1 à 18, et de préférence de 1 à 5 atomes de carbone ;
   et
- au moins un solvant choisi parmi :
   a) un solvant de formule (II) suivante: 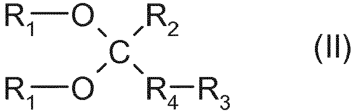 dans laquelle :
      - R₁ représente un groupe alkyle en C₁-C₄, linéaire ou ramifié, les deux radicaux R₁ pouvant être identiques ou différents et pouvant également être reliés, de préférence par l'intermédiaire d'une chaîne hydrocarbonée linéaire ou ramifiée, comprenant de 1 à 6 atomes de carbone ;
      - R₂ représente H ou un groupe alkyle en C₁-C₄, linéaire ou ramifié ;
      - R₄ représente une liaison covalente simple ou une chaîne hydrocarbonée linéaire ou ramifiée, comprenant de 1 à 6 atomes de carbone, de préférence alkyle ;
      - R₃ représente H, C(OR₁)₂R₂, C(O)OR₁, OC(O)R₂, OC(O)OR₁; et
   b) un solvant choisi parmi les cétones (cyclo)aliphatiques et les lactones.

Avantageusement le solvant est un solvant de formule (II) ou une cétone (cyclo)aliphatique.

Par chaîne hydrocarbonée, on entend une chaîne comportant des atomes de carbone et d'hydrogène et éventuellement un ou plusieurs hétéroatomes (tels que O, S, Si, etc..) et/ou hétérogroupes (tels que -NH, -N(substitué)), ladite chaîne étant éventuellement substituée par un ou plusieurs groupes choisis notamment parmi aryle, cycloalkyle, hétéroalkyle, halogène, (notamment fluor), une chaîne hydrocarbonée linéaire ou ramifiée halogénée (notamment fluorée) ou perhalogénée (notamment perfluorée), un groupe carboxyle, amino-primaire ou secondaire, NO₂ ou CN. La chaîne hydrocarbonée peut être linéaire ou ramifiée, voire cyclique. Elle peut être saturée ou insaturée, c'est-à-dire comporter une ou plusieurs double(s) et/ou triple(s) liaison(s). On peut citer notamment les chaînes alkylène et particulièrement polyméthylène -(CH₂)ₙ-, n étant généralement compris entre 1 et 12, substituées ou non substituées par des groupes tels que définis ci-dessus.

-X- est choisi parmi les groupes suivants :
- -O-;
- -S-;
- -N(R)-, dans lequel R représente un atome d'hydrogène ou une chaîne hydrocarbonée ayant généralement de 1 à 12 atomes, de préférence de 1 à 5 atomes de carbone, pouvant comprendre un ou plusieurs hétéroatomes, et pouvant être substitué ;
- 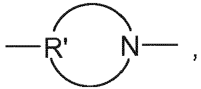 dans lequel R' représente une chaîne hydrocarbonée ayant généralement de 1 à 12 atomes, de préférence de 1 à 5 atomes de carbone, pouvant comprendre un ou plusieurs hétéroatomes, tels que O, S, Si, ou des hétérogroupes tels que -N=, -NR- (R étant tel que défini précédemment), pouvant être substitué, la chaîne R' formant avec N un cycle azoté, avantageusement polyazoté, de préférence diazoté, tel le cycle pipérazino ;
- -CO-N(R)- ;
- -N(R)-C(O)O-;
- -C(O)O-;
- 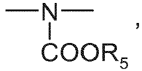 dans lequel R₅ représente un radical hydrocarboné ayant généralement de 1 à 12 atomes, de préférence de 1 à 5 atomes de carbone, pouvant comprendre un ou plusieurs hétéroatomes, tels que O, S, Si, ou des hétérogroupes tels que -N=, -NR- (R étant tel que défini précédemment),
- 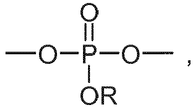 dans lequel R est tel que défini précédemment,
- 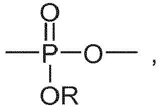 dans lequel R est tel que défini précédemment, et
- -NH-C(=O)-N(R)-, R étant tel que défini précédemment.

Avantageusement, dans le (poly)isocyanate de formule (I), au moins une, avantageusement deux, plus particulièrement trois, de préférence toutes, parmi les conditions suivantes sont satisfaites :
- X représente l'atome d'oxygène,
- A représente le groupe -CH₂-,
- Y représente -CH₂-
- Z représente une liaison ou -CH₂-, de préférence une liaison,
- A n'est pas relié à Y et Z n'est pas relié à Y.

La présente invention a pour objet une composition à base de (poly)isocyanate modifié comprenant :
- au moins un (poly)isocyanate modifié de formule (I) suivante : 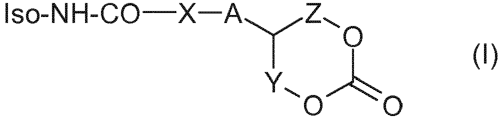 où :
   - Iso est le reste d'un (poly)isocyanate (après transformation d'une fonction isocyanate) ;
   - X représente un atome d'oxygène ;
   - A représente le groupe -CH₂ ;
   - Y représente -CH₂ ;
   - Z représente une liaison covalente simple ou le groupe -CH₂ ;
   - A n'est pas relié à Y et Z n'est pas relié à Y;
   et
- au moins un solvant de formule (II) suivante: 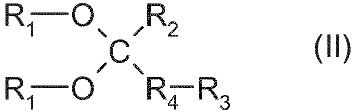 dans laquelle :
   - R₁ représente un groupe alkyle en C₁-C₄, linéaire ou ramifié, les deux radicaux R₁ pouvant être identiques ou différents et pouvant également être reliés, de préférence par l'intermédiaire d'une chaîne hydrocarbonée linéaire ou ramifiée, comprenant de 1 à 6 atomes de carbone ;
   - R₂ représente H ou un groupe alkyle en C₁-C₄, linéaire ou ramifié ;
   - R₄ représente une liaison covalente simple ou une chaîne hydrocarbonée linéaire ou ramifiée, comprenant de 1 à 6 atomes de carbone, de préférence alkyle ;
   - R₃ représente H, C(OR₁)₂R₂, C(O)OR₁, OC(O)R₂, OC(O)OR₁.

Selon un mode de réalisation tout particulièrement préféré, le (poly)isocyanate modifié selon l'invention est de formule suivante :

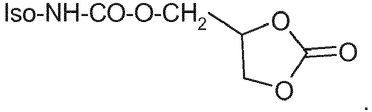

Le (poly)isocyanate modifié peut comporter en outre au moins une autre fonction isocyanate libre.

Les (poly)isocyanates modifiés peuvent être obtenus à partir de mono-, di-, voire poly-isocyanates.

Avantageusement, ils sont obtenus à partir d'isocyanates choisis dans la liste suivante :
- les diisocyanates,
- les polyisocyanates comprenant au moins un groupe isocyanurate, encore appelés trimères,
- les polyisocyanates comprenant au moins un groupe urétidine-dione, encore appelés dimères,
- les polyisocyanates comprenant au moins un groupe biuret,
- les polyisocyanates comprenant au moins un groupe carbamate,
- les polyisocyanates comprenant au moins un groupe allophanate,
- les polyisocyanates comprenant au moins un groupe ester,
- les polyisocyanates comprenant au moins un groupe amide,
- les polyisocyanates comprenant au moins une fonction urée,
- les polyisocyanates comprenant au moins une fonction imino-cyclo-oxa-diazine-dione,
- les polyisocyanates comprenant au moins une fonction cyclo-oxa-diazine-trione, et
- les polyisocyanates comprenant une combinaison d'un ou plusieurs groupes qui viennent d'être mentionnés, en particulier un groupe isocyanurate.

Les isocyanates listés ci-dessus peuvent également être partiellement ou totalement masqués, à l'exception de la fonction isocyanate modifiée comme indiqué ci-dessus.

Avantageusement, l'isocyanate est l'hexaméthylène diisocyanate.

Les isocyanates peuvent être aliphatiques, cycloaliphatiques et arylaliphatiques ou aromatiques.

Les polyisocyanates préférés sont choisis parmi les produits d'homo- ou d'hétéro-condensation d'alcoylène diisocyanate, comprenant notamment des produits du type "biuret" et du type "trimères", voire "prépolymères" à fonction isocyanate, comportant notamment des fonctions urée, uréthane, allophanate, ester, amide, acylurée, isocyanurate, oxadiazinetrione, immino-dimère, immino-trimère (imminotriazinedione), immino-oxadiazinedione (encore appelé trimère asymétrique), diazétidinedione (encore appelé dimère), et parmi les mélanges en contenant.

Les composés polyisocyanates peuvent également comporter des fonctions carbamates vraies (R-O-C(=O)-NH₂) ou des fonctions époxy ou des fonctions carbonates, de préférence de fonctions carbonates cycliques.

Il peut s'agir, par exemple, des polyisocyanates commercialisés par la Société Rhodia sous la dénomination "Tolonate®".

De manière générale, les polyisocyanates préférés sont les produits d'homo- ou d'hétéro-condensation des monomères isocyanates aliphatiques, (cyclo- ou aryl-)aliphatiques suivants :
- 1,6-hexaméthylène-di-isocyanate (HDI),
- 1,12-dodécane-di-isocyanate,
- cyclobutane-1,3-di-isocyanate,
- cyclohexane-1,3 et/ou 1,4-di-isocyanate,
- 1-isocyanato-3,3,5-triméthyl-5-diisocyanatométhylcyclohexane (isophorone di-isocyanate, IPDI),
- les isocyanatométhyloctylènedi-isocyanates (TTI), notamment le 4-isocyanatométhyl-1,8-octylènedi-isocyanate,
- 2,4 et/ou 2,6-hexahydrotoluylène di-isocyanate (H₆TDI),
- hexahydro-1,3 et/ou 1,4-phénylène di-isocyanate,
- perhydro 2,4' et/ou 4,4'-diphénylméthane di-isocyanate (H₁₂MDI), et en général les précurseurs aromatiques aminés ou les carbamates perhydrogénés,
- les bis-isocyanatométhylcyclohexanes (notamment 1,3 et 1,4) (BIC),
- les bis-isocyanatométhylnorbornanes (NBDI),
- 2-méthylpentaméthylène di-isocyanate (MPDI),
- les tétraméthylxylylène di-isocyanates (TMXDI), et
- les dérivés notamment esters de la lysine di- ou tri-isocyanate (LDI ou LTI).

Les produits d'homo-condensation sont les produits issus de la condensation d'un des monomères isocyanates, mentionnés dans la liste ci-dessus, avec lui-même. Les produits d'hétéro-condensation sont les produits issus de la condensation de deux ou plusieurs des monomères, identiques ou différents, mentionnés dans la liste ci-dessus, entre eux et/ou éventuellement avec un ou plusieurs composés à hydrogène mobile, tels que par exemple un alcool, un diol, une amine primaire ou secondaire, un polyol, notamment polyester et/ou polyéther possédant des fonctions hydroxyles libres, et autres composés analogues.

Les polyisocyanates compris dans la composition de la présente invention peuvent également être des dérivés de polyisocyanates issus d'isocyanates aromatiques utilisés seuls ou en mélange avec des composés isocyanates aliphatiques.

À titre d'exemples d'isocyanates aromatiques, on peut citer de manière non limitative :
- le 2,4- et/ou le 2,6-toluylène di-isocyanate,
- le diphénylméthane-2,4' et/ou 4,4'-di-isocyanate (MDI),
- le 1,3- et/ou le 1,4-phénylène di-isocyanate,
- le triphénylméthane-4,4',4"-triisocyanate, et
- les oligomères du MDI, ou TDI.

Des mélanges de ces polyisocyanates (cyclo)aliphatiques et/ou aromatiques peuvent aussi être utilisés.

Selon un mode de réalisation particulier, la composition comprend un polyisocyanate qui est le produit de l'homocondensation des isocyanates choisis parmi le HDI et l'IPDI ou qui provient d'un mélange de ces produits d'homocondensation.

Le (poly)isocyanate de l'invention modifié a au moins une partie de ses fonctions isocyanates, avantageusement au moins 50% des fonctions isocyanates, de préférence au moins 75% des fonctions isocyanates qui sont modifiées par un composé de formule générale (III) : 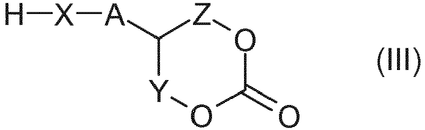 dans laquelle X, A, Y et Z sont tels que définis ci-dessus.

Le composé de formule (III) comprend un groupement réticulant. Par « groupement réticulant » on entend un groupe capable dans des conditions appropriées de libérer un groupement fonctionnel capable à son tour de réagir avec une fonction réactive pour conduire notamment à une réaction de réticulation. En revanche, ce « groupement réticulant » ne libère pas de groupement fonctionnel dans les conditions de réticulation de la fonction isocyanate avec laquelle le composé (III) qui le portait a réagi.

Le composé de formule (III) est avantageusement le carbonate de glycérol, répondant à la formule suivante :

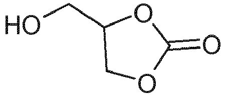

Il peut aussi s'agir de carbonates d'acide gras ou leurs esters, tels que le 8,9-carbonate de l'acide oléique.

La composition comprend, outre le (poly)isocyanate modifié, également un solvant de formule (II) décrite.

Des modes de réalisation plus particuliers quant à la nature du solvant de formule (II) vont être décrits ci-après.

On notera tout d'abord que les radicaux R₁ peuvent éventuellement être reliés de manière à former des ponts type dioxolane ou dioxane.

R₄ peut être un radical alkylène de 1 à 6 atomes de carbone, de préférence de 1 à 4 atomes de carbone. Le radical alkylène peut éventuellement être substitué de manière à comprendre des groupes cétone, esters ou éther par exemple.

Le solvant de formule (II) contient avantageusement au plus 20 atomes de carbone et il peut présenter un point de fusion d'au plus 0°C et un point d'ébullition d'au plus 350°C.

Le solvant peut répondre plus particulièrement à la formule (II) dans laquelle R₂ représente H ou CH₃, R₄ représente une liaison de covalence simple ou un radical alkylène linéaire comportant 1, 2 ou 3 atome(s) de carbone, et R₃ représente H, -(CH)(OR₁)₂, ou -C(=O)(OR₁).

Plus particulièrement encore, le solvant peut répondre à la formule (II) dans laquelle R₂ représente H ou CH₃, R₄ représente un radical alkylène linéaire comportant 1, 2 ou 3 atome(s) de carbone, de préférence R₄ représente méthylène, et R₃ représente H, ou dans laquelle R₂ représente H ou CH₃, R₄ représente une liaison covalente et R₃ représente -(CH)(OR₁)₂, ou -C(=O)(OR₁).

Selon un mode de réalisation particulier le solvant peut être choisi plus particulièrement parmi ceux de formule (II) dans laquelle les groupes R₁ peuvent être des radicaux méthyle ou éthyle, R₄ est une liaison covalente et R₂ l'hydrogène. Dans le cas de ce mode de réalisation, le solvant peut répondre plus particulièrement à la formule (II) dans laquelle R₂ représente H, R₄ est une liaison covalente, R₃ représente -(CH)(OR₁)₂ et R₁ représente le radical éthyle, le solvant étant alors le 1,1,2,2-tétraéthoxy-éthane. Dans le cas de ce même mode de réalisation, le solvant peut aussi répondre plus particulièrement à la formule (II) dans laquelle R₂ représente H, R₄ est une liaison covalente, R₃ représente -C(=O)(OR₁) et R₁ représente le radical éthyle, le solvant étant alors le 2,2-diéthoxy-acétate d'éthyle. Le solvant peut aussi répondre à la formule (II) dans laquelle R₂ représente H, R₄ est une liaison covalente, R₃ représente -C(=O)(OR₁) et R₁ représente le radical méthyle, le solvant étant alors le 2,2-diméthoxy-acétate de méthyle.

Selon un mode de réalisation préférentiel, le solvant répond à la formule (II) dans laquelle R₂ représente H, R₄ est une liaison covalente, R₃ représente -(CH)(OR₁)₂ et R₁ représente le radical méthyle, le solvant étant alors le 1,1,2,2-tétraméthoxy-éthane.

Ce dernier solvant constitue une variante avantageuse car le 1,1,2,2-tétraméthoxy-éthane est un produit de faible odeur, non inflammable et non toxique. Il est aussi miscible à l'eau en toutes proportions.

Les solvants de formule (II) utilisés dans le cadre de l'invention et qui viennent d'être décrits sont des produits connus. On pourra notamment se référer à l'enseignement de FR-A-2855171.

Lorsqu'on utilise dans la composition un solvant choisi parmi les cétones aliphatiques, ce solvant est avantageusement la méthyléthylcétone (MEK), la méthylisobutylcétone (MIBK) ou la méthylamylcétone (MAK).

Bien entendu, la demande décrit les cas où la composition contient plusieurs solvants. Ces solvants peuvent être un mélange de solvants selon la formule (II) et/ou de solvants qui sont des cétones (cyclo)aliphatiques et/ou de solvants qui sont des lactones. Ce peut être également une combinaison d'au moins un solvant de formule (II) et/ou d'au moins un solvant cétone aliphatique et/ou au moins un solvant lactone, avec un ou plusieurs autres solvants connus et utilisés pour ce type de compositions, par exemple l'acétate de butyle, l'acétate de méthoxypropyle, le diacétate de propylène glycol, l'acétate de butyléthylène glycol, le diméthyldipropylène glycol, les esters d'acide carbonique, comme le carbonate de propylène, l'éthoxyproprionate d'éthyle, la N-éthylpyrrolidone. On choisit toutefois de préférence ces solvants parmi ceux qui sont non inflammables, non toxiques et peu odorants.

On utilise de préférence un solvant de point d'ébullition compris entre 50°C et 350°C, plus particulièrement entre 75°C et 300°C.

Les solvants utilisés dans les compositions de l'invention permettent de conférer à celles-ci une viscosité convenable en fonction du type d'application recherchée, ainsi qu'une bonne véhiculation et une bonne manipulation des (poly)isocyanates modifiés de l'invention.

La proportion de (poly)isocyanate modifié dans la composition de l'invention varie en fonction de l'application et est généralement comprise entre 5% et 75% ; elle est plus particulièrement comprise entre 5% et 50% et encore plus particulièrement entre 5% et 30% en poids par rapport au poids de la composition.

On notera que dans le cas d'un mélange d'un ou de plusieurs solvants selon l'invention avec un ou des solvants connus mentionnés plus haut, la proportion en solvant selon l'invention est avantageusement d'au moins 50% en masse par rapport à l'ensemble des solvants, de préférence au moins 75%, encore plus préférentiellement au moins 90%; la proportion globale en l'ensemble des solvants restant alors dans la gamme donnée au paragraphe précédent.

Il est également décrit un procédé de préparation de la composition de l'invention comprenant les étapes suivantes :
- réaction d'un isocyanate, éventuellement polyisocyanate et/ou comportant un groupe choisi parmi les groupes carbamate, urée, biuret, urétidine-dione, isocyanurate, uréthanne, et allophanate avec un composé de formule générale (III), et avec éventuellement au moins un polyol choisi parmi les polyesters et/ou polyéther, en présence du solvant de formule générale (II) et/ou du solvant cétone (cyclo)aliphatique et/ou du solvant lactone, et
- éventuellement isolement du produit obtenu.
L'invention concerne également un procédé de préparation de la composition de l'invention comprenant les étapes suivantes :
- réaction d'un isocyanate, éventuellement polyisocyanate et/ou comportant un groupe choisi parmi les groupes carbamate, urée, biuret, urétidine-dione, isocyanurate, uréthanne, et allophanate avec un composé de formule générale (III), et avec éventuellement au moins un polyol choisi parmi les polyesters et/ou polyéther, en présence du solvant de formule générale (II), et
- éventuellement isolement du produit obtenu.

Tout ce qui a été décrit ci-dessus concernant les isocyanates de la composition de l'invention s'applique ici à l'identique pour le procédé de l'invention.

Lorsque, dans le composé de formule générale (III), X représente un atome d'oxygène ou de soufre, la composition peut être obtenue par condensation des composés isocyanates que l'on souhaite modifier avec le composé de formule générale (III) telle que définie précédemment dans laquelle X représente O ou S, sous chauffage, éventuellement en présence d'un catalyseur, et en présence du solvant de formule générale (II) et/ou du solvant cétone (cyclo)aliphatique et/ou du solvant lactone.

Lorsque, dans le composé de formule générale (III), X représente un groupe NR tel que défini ci-dessus, la composition peut être obtenue par condensation avec un composé isocyanate à la température ambiante ou sous chauffage en présence du solvant de formule générale (II) et/ou du solvant cétone (cyclo)aliphatique et/ou du solvant lactone.

Le composé de formule générale (III) peut être mis en présence du solvant de formule générale (II) et/ou du solvant cétone (cyclo)aliphatique et/ou du solvant lactone, avant la réaction avec l'isocyanate. L'avantage du solvant de l'invention est qu'il est un solvant du composé de formule générale (III), ce qui n'est pas généralement le cas des solvants usuels utilisés avec des isocyanates, tels que par exemple l'acétate de n-butyle. Ceci en particulier lorsque le composé de formule (III) est le carbonate de glycérol.

L'isocyanate peut également être mis en présence du solvant de formule générale (II) et/ou du solvant cétone (cyclo)aliphatique et/ou du solvant lactone, avant la réaction avec le composé de formule générale (III). Le solvant de l'invention est un solvant de l'isocyanate.

Le composé de formule (III) peut être mis en présence de l'isocyanate, puis le mélange ainsi formé est mis en contact avec le solvant de l'invention.

Selon un mode de réalisation particulier, le procédé comprend une étape de mélange d'au moins un (poly)isocyanate modifié avec au moins un solvant de l'invention. Toute méthode de mélange connue de l'homme du métier peut être utilisée pour mettre en oeuvre le procédé de l'invention. L'avantage du solvant de l'invention est qu'il permet une bonne solubilisation du (poly)isocyanate modifié de l'invention, ce qui permet une manipulation et véhiculation aisée de ce dernier. Le solvant de l'invention peut également être un avantage pour la formulation finale du (poly)isocyanate modifié, notamment pour les formulations de peinture, car le solvant présente une faible odeur.

La demande décrit également, une composition comprenant :
- le composé de formule générale (III) tel que défini ci-dessus ; et
- au moins un solvant choisi parmi :
   a) un solvant de formule (II) suivante: 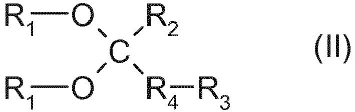 dans laquelle :
      - R₁ représente un groupe alkyle en C₁-C₄, linéaire ou ramifié, les deux radicaux R₁ pouvant être identiques ou différents et pouvant également être reliés, de préférence par l'intermédiaire d'une chaîne hydrocarbonée, linéaire ou ramifiée, comprenant de 1 à 6 atomes de carbone ;
      - R₂ représente H ou un groupe alkyle en C₁-C₄, linéaire ou ramifié ;
      - R₄ représente une liaison covalente simple ou une chaîne hydrocarbonée, linéaire ou ramifiée, comprenant de 1 à 6 atomes de carbone, de préférence alkyle ;
      - R₃ représente H, C(OR₁)₂R₂, C(O)OR₁, OC(O)R₂, OC(O)OR₁; et
   b) un solvant choisi parmi les cétones (cyclo)aliphatiques et les lactones.

Comme indiqué ci-dessus, l'avantage du solvant de l'invention est qu'il est un solvant du composé de formule générale (III). Cela permet notamment de le mettre en oeuvre avec des isocyanates, pour lesquels le solvant de l'invention est également solvant. Lorsque le composé de formule générale (III) est utilisé en réaction avec des isocyanates pour préparer le (poly)isocyanate modifié de l'invention, le même solvant de l'invention utilisé pour mettre en oeuvre le composé de formule générale (III) permet également de solubiliser le (poly)isocyanate modifié final obtenu, ce qui représente un avantage.

Les éventuelles fonctions isocyanates libres du (poly)isocyanate modifié de l'invention peuvent former par condensation avec des groupements à hydrogène mobile NuH, notamment des polyols, ou des polyamines ou des polysulfhydryles, des prépolymères à fonctions carbonates pendantes et fonctions terminales isocyanates libres ou alcools ou amines ou sulfhydryles selon le rapport NCO/NuH, NuH étant tel que défini ci-dessus.

Après ouverture du groupe réticulant avec un agent réactif approprié, le prépolymère ainsi obtenu peut être ultérieurement réticulé.

Les fonctions réagissant avec le groupement réticulant du poly(isocyanate) modifié de l'invention sont les fonctions alcools, amines primaires ou secondaires, des composés hétérocycliques azotés possédant un atome d'hydrogène réactif, des oximes ou des phénols, de préférence des phénates ou des carboxylates.

De préférence, on choisira l'ammoniaque, les amines primaires ou secondaires ou les hétérocycles azotés, par exemple les guanidines ou leurs sels qui agissent par ouverture du cycle.

Pour obtenir des réseaux ou films polyuréthannes, on peut faire réagir ces prépolymères avec des amines de préférence di-ou poly-amines, primaires ou secondaires de préférence. On obtient ainsi des réseaux à fonctions hydroxyles pendantes qui peuvent être soit autoréticulées avec les NCO présents dans le milieu, soit autorisent un greffage ou permettent une réaction de réticulation avec des mélanges réactifs avec ces fonctions.

L'un des nombreux intérêts de la composition selon l'invention est qu'elle peut servir de base à la préparation de polymères et/ou de réticulats utiles, par exemple, comme constituants principaux de revêtements en tous genres, tels que des peintures ou des vernis. Dans de telles utilisations, les qualités de dureté des polymères réticulables font partie de celles qui sont recherchées sur le plan technique et fonctionnel.

Ainsi, dans un quatrième objet, l'invention concerne l'utilisation de la composition de l'invention pour la préparation de revêtements non expansés, notamment de peintures, vernis ou adhésifs.

Par revêtement on entend tout type de couche appliquée sur un substrat de nature à protéger et/ou à décorer celui-ci, par exemple une peinture ou un vernis.

Le procédé est mis en oeuvre en appliquant la composition de l'invention sur le substrat par toute technique connue.

Dans le cas des formulations aqueuses, la composition de l'invention peut être mise en émulsion au moyen de divers composés tels que des tensioactifs, ou des polyols à caractère émulsionnable ou être rendus hydrosolubles par greffage de fonctions non ioniques telles que polyoxyde d'alkylène ou de fonctions ioniques acides telles que celles des acides parahydroxybenzoïque (PHBA) diméthylolpropionique, sulfonique, sulfamique et des dérivés phosphoriques ou des fonctions ioniques basiques telles que les N,N-dialkylhydroxylalkylamines, notamment la N,N-diméthyléthanolamine ou les dérivés des guanidines.

Le greffage peut être réalisé de manière réversible (PHBA) ou irréversible.

Le substrat est un matériau qui peut être choisi parmi le bois, les métaux, les ciments, les matériaux plastiques, les textiles, le cuir.

Dans le cas d'un substrat métallique, le métal peut être par exemple l'aluminium ou un acier.

On notera que le procédé s'applique à des substrats pouvant comporter plusieurs revêtement superposés et, dans ce cas, le produit de l'invention peut être utilisé pour la préparation de l'un quelconque de ces revêtements. Toutefois, le produit de l'invention peut être utilisé pour un revêtement de finition, c'est le cas notamment des substrats en cuir.

Une fois la composition déposée, la réaction de réticulation du (poly)isocyanate modifié de la composition peut se faire à température ambiante ou à chaud à une température qui peut être comprise entre 30°C et 300°C, de préférence entre 40°C et 250°C et encore plus préférentiellement entre 50°C et 150°C. La température et le temps de réticulation sont adaptés en fonction du substrat et en fonction des cinétiques de réticulation, ces dernières étant elles-mêmes fonction des réactifs utilisés. Dans le cas de substrats sensibles à la température on utilisera plus particulièrement des catalyseurs de réticulation.

La composition de l'invention peut aussi être utilisée comme adhésif. Dans un tel cas, on forme un revêtement comme décrit plus haut, ce revêtement ayant ici des propriétés d'adhésif, sur un substrat destiné à être collé avec un autre élément. Le substrat peut être tout particulièrement un substrat en bois.

D'autres détails ou avantages de l'invention apparaîtront plus clairement à la vue des exemples donnés ci-dessous.

### EXEMPLES

### Matières premières

❖ Jeffsol : carbonate de glycérine, commercialisé par la société Huntsman et désigné GC par la suite ;
   N° CAS : 931-40-8, MW = 118.09 g/mol ;
   Autre désignation: Glycerol Carbonate.
❖ Tolonate® HDT commercialisé par la société Rhodia :
   Oligomères d'hexaméthylène diisocyanate ;
   N° CAS : 28182-81-2.
❖ Vialkyd AN 903/70 EPAC commercialisé par la société Cytec :
   Résine polyester à 70 % en poids dans l'acétate d'éthoxypropyle (70EPAC). % OH (en poids) sur solide sec : environ 4,4 %.
❖ Highsolv P commercialisé par la société Clariant :
   Tétraméthoxyéthane, solvant désigné HSP par la suite.
❖ Stobicoat N873 commercialisé par la société Stockmeier :
   Systèmes époxy-amine.
❖ Jeffamines commercialisées par la société Huntsman :
   **Jeffamine XTJ 582,** N° CAS : 9046-10-0 ;
   Polyoxypropylène diamine 60-100%

      NH₂-CH-(CH₃)-CH₂ - [O-CH₂-CH(-CH₃)]ₙ-O-CH₂-CH(-CH₃)-NH₂
   **Jeffamine T-403,** N° CAS : 39423-51-3
   polyoxypropylènetriamine ; Mw=438.4g/mol 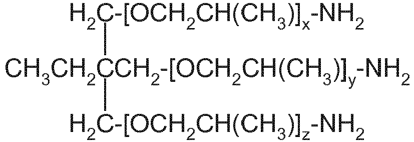 avec x + y + z = ∼ 5,3
❖ Duroftal VPI 2803/78 BAC commercialisé par la société Cytec :
   Polyester à fonctions hydroxylées à 78 % en poids dans l'acétate de butyle ; % OH (en poids) = ∼ 5,4 %.
❖ Vialkyd VAN 9460 commercialisé par la société Cytec :
   Polyester à fonctions hydroxylées à 80 % en poids dans l'acétate de butyle. % OH (en poids) = ∼ 4,3 %.
❖ Ancamides commercialisées par la société Airproducts :
   **Ancamide 2353** : Résine polyamidoamine ;
   **Ancamide 2426** : Résine polyamidoamine.

### Exemple 1 : Synthèse d'un durcisseur polyisocyanate HDT à fonctions isocyanates masquées par le carbonate de glycérol

Dans un réacteur d'un litre à double enveloppe purgé à l'argon, sont introduits successivement 404,2 g de Tolonate® HDT et 241,8 g de carbonate de glycérol.

50 ppm de catalyseur de dibutyldilaurate d'étain (DBTL) par rapport au Tolonate® HDT est ajouté. La température de chauffe est fixée à 90°C. Après 5 minutes, la réaction est exothermique atteignant une température de 170°C. Après refroidissement et conservation de la température du milieu à environ 120°C pendant 40 minutes, le produit est analysé par spectroscopie infra-rouge. Les fonctions NCO ont disparu, le produit obtenu est un polyisocyanate à motifs isocyanurates essentiellement dont les fonctions NCO sont bloquées à 100% par le carbonate de glycérol. Il est noté HDT - GC.

### Exemple 2 : Etude de solubilité du Tolonate® HDT à fonctions isocyanates masquées par le carbonate de glycérol

Dans 11 flacons de 10 mL, on pèse environ 2,5 g de HDT GC pur de l'exemple 1.

On ajoute ensuite dans chaque flacon environ 0,83 g d'un solvant pour obtenir des produits à 75% d'extrait sec. Les flacons sont fermés. On chauffe chacun des mélanges à 100°C environ pour faire fondre le produit, le dissoudre dans le solvant et observer sa solubilité. Une fois le produit fondu, on agite 5 minutes.

Visuellement, on évalue :
- la facilité de mélange du solvant et du produit ;
- la solubilité du produit dans chaque solvant ou son éventuelle démixtion ; et
- la viscosité qui en résulte.

Les résultats sont présentés dans le tableau récapitulatif Tableau 1.

**Tableau 1**

| | ***75% d'extrait sec*** | | |
|---|---|---|---|
| | ***Facilité de mélange*** | ***Solubilité*** | ***Viscosité*** |
| ***HighSolv P*** | Oui | Limpide | Bonne |
| ***Toluène*** | Non | Décante | - |
| ***Solvesso 100*®** | Non | Décante | - |
| ***Xylène*** | Non | Décante | - |
| ***Acétate de butyle*** | Non | Trouble | - |

Par la suite, afin d'étudier la solubilité à 50% d'extrait sec, on ajoute environ 1,667 g de solvant complémentaire, on chauffe, on agite et on évalue de la même manière que précédemment.

Les résultats sont présentés dans le tableau récapitulatif Tableau 2.

**Tableau 2**

| | ***50% d'extrait sec*** | | |
|---|---|---|---|
| | ***Facilité de mélange*** | ***Solubilité*** | ***Viscosité*** |
| ***HighSolv P*** | Oui | Limpide | Bonne |
| ***AMP*** | Non | Décante | - |
| ***Toluène*** | Non | Décante | - |
| ***Solvesso 100*** | Non | Décante | - |
| ***Xylène*** | Non | Décante | - |
| ***Acétate de butyle*** | Non | Décante | - |

Quel que soit l'extrait sec, on constate que le Highsolv P permet une bonne solubilisation du produit de réaction entre le Tolonate® HDT et le carbonate de glycérol alors que les solvants couramment utilisés pour la solubilisation des polyisocyanates ne conviennent pas.

### Exemple 3 : Synthèse de HDT - GC à 75 % en poids dans le Highsolv P

Dans un réacteur double enveloppe d'un litre, on fait passer un courant d'argon puis on charge successivement :
- 402,5 g de Tolonate® HDT dont le taux en fonctions isocyanate (NCO) est de 0,501 mole pour 100 g, soit 21% en poids de fonctions NCO pour 100 g de produit ;
- 237,9 g de carbonate de glycérol (Jeffsol GC) (2,01 moles) ; et
- 213,4 g d'HighSolv P.

Le ratio molaire des fonctions NCO / fonctions OH est de 1. On chauffe à 110°C et on vérifie régulièrement par infrarouge si les fonctions isocyanates sont encore présentes dans le milieu. Après 18 heures, toutes les fonctions NCO ont réagi (suivi réalisé par infrarouge) et l'extrait sec du produit final est de 75% d'extrait sec.

Bandes révélées sur le spectre Infra-rouge :
∘ Présence du C=O Carbonate à 1798 cm⁻¹ ,
∘ Présence du carbamate (NH à 3360 cm⁻¹, - C=O à 1700 cm⁻¹, - CONH à 1531 cm⁻¹ et à 1248 cm⁻¹) ;
∘ Présence du cycle isocyanurate (1468 cm⁻¹ et 1683 cm⁻¹).

### Exemple 4 : Synthèse des dérivés HDT GC greffés résines polyester : HDT GC + Vialkyd AN903/70 EPAC

La réaction est effectuée dans un réacteur d'un litre double enveloppe. Après avoir purgé le réacteur avec un courant d'argon, ont été chargés successivement le Tolonate® HDT (149,1 g, taux en fonctions isocyanate (NCO) = 0,515 mole pour 100 g), le carbonate de glycérol (82,23 g, Mw=118 g/mol, Jeffsol GC). Par la suite, 294,79 g de Highsolv P a été ajouté afin d'obtenir un produit final à 50% d'extrait sec. La température du milieu réactionnel est fixée à 110°C et l'avancement de la réaction entre les fonctions isocyanates et les fonctions hydroxyles est contrôlé par Infrarouge.

Après 5h00 de réaction à 110°C, on constate une diminution significative du pic correspondant aux fonctions NCO, les fonctions hydroxyles du carbonate de glycérol ayant réagi en majorité. 42,3 g de Vialkyd AN903/70EPAC (Cytec, résine polyester, %OH = 4,4%, 70% extrait sec) est ajouté au milieu réactionnel. La réaction a ensuite été prolongée 2 heures à 110°C jusqu'à disparition totale des fonctions isocyanates (suivi par infrarouge).

Le produit final sera fréquemment écrit par la suite HDT GC Vialkyd.

### Exemple 5 : Synthèse des dérivés HDT GC greffés résines polyester : HDT GC + Vialkyd VAN 9460

Le même procédé que l'exemple 4 a été utilisé dans cet exemple. Les réactions ont été réalisées dans des tubes Schott de 30 mL.

Comme précédemment, on fait réagir 85% du ratio molaire des fonctions isocyanates avec du carbonate de glycérol et 15% des fonctions isocyanates avec chacune des résines.

Dans un tube Schott, sont introduits 7,14 g de Tolonate® HDT puis 3,64 g de GC et enfin 12,92 g de Highsolv P.

Le mélange est ensuite chauffé et mélangé à 110°C pendant 8 heures avant d'incorporer 2,68 g de Vialkyd VAN9460. Cinq heures après avoir incorporé la résine polyester, 0,5 g de catalyseur (0,1 g de DBTL, Fluka dans 10 g d'acétate de butyle) sont ajoutés pour accélérer la réaction. La température a été fixée à 80°C et après 1 heure, les fonctions NCO avaient totalement réagi (suivi par infra rouge).

### Exemple 6 : Synthèse des dérivés HDT GC greffés résines polyester HDT GC +Duroftal VPI 2803

Le même procédé que l'exemple 4 a été utilisé dans cet exemple. Les réactions ont été réalisées dans des tubes Schott de 30 mL.

Comme précédemment, on fait réagir 85% du ratio molaire des fonctions isocyanates avec du carbonate de glycérol et 15% des fonctions isocyanates avec chacune des résines.

Dans un tube Schott, sont introduits 7,016 g de Tolonate® HDT, puis 3,57 g de carbonate de glycérol et enfin 12,27 g de Highsolv P.

Le mélange est ensuite chauffé et mélangé à 110°C pendant 8 heures avant d'incorporer 2,15 g de Duroftal VPI 2803. Après une durée de 4h15 après introduction de la résine polyester, 0,5 g de catalyseur (0,1 g de DBTL, Fluka dans 10 g d'acétate de butyle) sont ajoutés pour accélérer la réaction. La température est fixée à 80°C et après 1 heure, les fonctions NCO avaient totalement réagi voir spectre Infra rouge ci après.

### Exemple 7 : Préparation de formulation de HDT-GC à 50 % d'extrait sec

Les synthèses des HDT-GC de l'exemple 3 ont conduit à des produits à 75% dans le Highsolv P. Pour faciliter son utilisation en application, ces mélanges ont été dilués dans le Highsolv P afin d'obtenir un produit à 50% d'extrait sec. On trouvera dans le tableau 3 ci après la dilution réalisée.

**Tableau 3**

| **Échantillon** | **HDT GC 75% solvant** | **Solvant à ajouter (g) pour obtenir HDT GC 50% solvant** |
|---|---|---|
| **1** | 104,9 g HDT 75% Highsolv P | 52,5 g Highsolv P |

### Exemple 8 : Obtention de films poly-uréthanes

Les films polyuréthane sont obtenus par réaction de diverses Jeffamines de la société Huntsman avec le produit de l'exemple 4.

On réalise différentes formulations l'une avec un ratio molaire fonction carbonates cycliques / fonctions amines primaires de 1/1 et l'autre avec un ratio molaire fonction carbonates cycliques / fonctions amines primaires de 1/1,2.

Après réalisation du mélange le produit est appliqué sur plaque de verre avec une épaisseur de 200 µm film humide. Le produit est laissé sécher à température ambiante.

Les formulations sont mentionnées dans le tableau 4.

**Tableau 4**

| ***Partie A*** | ***Partie B*** | ***Partie A en poids*** | ***Partie B en poids*** |
|---|---|---|---|
| ***HDT GC Vialkyd Exemple 4*** | XTJ 582 | 10 g | 2,69 g |
| ***HDT GC Vialkyd Exemple 4*** | Jefflink T403 | 10 g | 2 g |
| ***HDT GC Vialkyd Exemple 4*** | XTJ 582 | 10 g | 3,23 g |
| ***HDT GC Vialkyd Exemple 4*** | Jefflink T403 | 10 g | 2,4 g |

L'aspect des films est correct.

### Exemple 9 : Obtention d'un revêtement polyuréthane avec des polyamidoamines (Ancamide)

- Produit final obtenu dans l'exemple 4 : HDT GC Vialkyd 50% HighSolv P ;
- Produit final obtenu dans l'exemple 7 : HDT GC 50% HighSolv P ;
- Ancamide 2353 (Airproducts) ;
- Ancamide 2426 (Airproducts).

Les films polyuréthane sont obtenus par réaction de diverses polyamidoamines avec différents durcisseurs à fonctions carbonates formulés dans le Highsolv P.

On réalise différentes formulations l'une avec un ratio molaire fonction carbonates cycliques / fonctions amines primaires de 1/1.

Après réalisation du mélange le produit est appliqué sur plaque de verre avec une épaisseur de 200 µm (film humide). Le produit est laissé séché à température ambiante.

L'aspect du film est analysé après 48 h de séchage.

Les résultats sont présentés dans le Tableau 5 suivant.

**Tableau 5**

| **Nom Partie A** | ***Nom Partie B*** | ***Quantité Partie B*** | ***Aspect du film*** |
|---|---|---|---|
| **Exemple 4 (5g)** | Ancamide 2353 | 1,39 g | Bon |
| **Exemple 4 (5g)** | Ancamide 2426 | 1,14 g | Bon |
| **Exemple 7 (5g)** | Ancamide 2353 | 1,83 g | Bon |

### Exemple 10 : Obtention d'un revêtement polyuréthane époxy

On prépare une formulation constituée de 2 volumes de partie A et 1 volume de partie B. La partie B est le produit commercial Stobicoat N873 partie amine. La partie A est un mélange de produit commercial Stobicoat N873 partie époxy et de formulation de l'invention des exemples 7 ou 4.

On applique le mélange à une épaisseur de 200 µm humide et on laisse sécher à température ambiante. Les mesures de brillance sont réalisées 7 jours après application.

Les résultats sont présentés dans le tableau 6 ci après.

**Tableau 6**

| ***Système A*** | ***Système B*** | ***Brillance à 20°*** | ***Brillance à 60°*** | ***Aspect du film*** |
|---|---|---|---|---|
| **Stobicoat N873 Partie Epoxy** | Stobicoat N873 partie amine | 108 | 105 | Transparent correct |
| **60g Stobicoat N873 Partie Epoxy + 40 g de formulation de l'exemple 7 (HDT GC 50% dans Highsolv P )** | Stobicoat N873 partie amine | 93 | 100 | Transparent correct |
| **60 g de Stobicoat N873 Partie Epoxy + 40 g de l'exemple 4 (HDT GC Vialkyd AN903)** | Stobicoat N873 partie amine | 106 | 104 | Transparent correct |

Les films obtenus permettent d'obtenir des films corrects avec un brillant similaire au système standard. L'ajout de dérivés des formulations de l'invention des exemples 4 et 7 au système commercial époxy standard permet une durabilité supérieure aux systèmes époxy-amine standards ne contenant pas de composés de l'invention.

### Exemple 11 : Obtention d'un revêtement polyuréthane époxy

On prépare une formulation constituée de 2 volumes de partie A et 1 volume de partie B.

La partie B est le produit commercial Stobicoat N873 partie amine. La partie A est un mélange de produit commercial Stobicoat N873 partie époxy et de formulation de l'invention de l'exemple 5.

On applique le mélange à une épaisseur de 200 µm humide et on laisse sécher à température ambiante. Les mesures de brillance sont réalisées 7 jours après application.

Les résultats sont présentés dans le tableau 7 ci après.

**Tableau 7**

| ***Système A*** | ***Système B*** | ***Facilité de mélange*** | ***Aspect film*** | ***Brillance 60°*** |
|---|---|---|---|---|
| ***Stobicoat N873 Partie Epoxy*** | Stobicoat N873 partie amine | oui | bon | 98,5 |
| ***90 g Stobicoat N873 Partie Epoxy* + *10g de formulation de l'exemple 5 (HDT GC Vialkyd VAN 9460 50% HighSolv P)*** | Stobicoat N873 partie amine | oui | bon | 101.5 |
| ***60 g de Stobicoat N873 Partie Epoxy* + *40 g de formulation de l'exemple 5 (HDT GC*+ *Vialkyd VAN 9460 50% HighSolv P*** | Stobicoat N873 partie amine | oui | bon | 101 |

Les films obtenus permettent d'obtenir des films corrects avec un brillant similaire au système standard. L'ajout de dérivés des formulations de l'invention de l'exemple 5 au système commercial époxy standard permet une durabilité supérieure aux systèmes époxy-amine standards ne contenant pas de composés de l'invention.

## Revendications

1. Composition à base de (poly)isocyanate modifié comprenant :
• au moins un (poly)isocyanate modifié de formule (I) suivante : où : 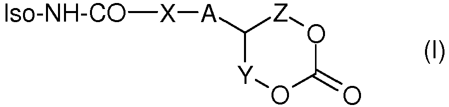
- Iso est le reste d'un (poly)isocyanate (après transformation d'une fonction isocyanate) ;
- X représente un atome d'oxygène ;
- A représente le groupe -CH₂- ;
- Y représente le groupe -CH₂- ;
- Z représente une liaison covalente simple ou le groupe -CH₂- ;
- A n'est pas relié à Y et Z n'est pas relié à Y ;
et
• au moins un solvant de formule (II) suivante: dans laquelle : 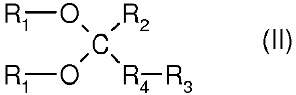
- R₁ représente un groupe alkyle en C₁-C₄, linéaire ou ramifié, les deux radicaux R₁ pouvant être identiques ou différents et pouvant également être reliés, de préférence par l'intermédiaire d'une chaîne hydrocarbonée linéaire ou ramifiée, comprenant de 1 à 6 atomes de carbone ;
- R₂ représente H ou un groupe alkyle en C₁-C₄, linéaire ou ramifié ;
- R₄ représente une liaison covalente simple ou une chaîne hydrocarbonée linéaire ou ramifiée, comprenant de 1 à 6 atomes de carbone ; de préférence alkyle
- R₃ représente H, C(OR₁)₂R₂, C(O)OR₁, OC(O)R₂, OC(O)OR₁.

2. Composition selon la revendication 1, **caractérisée en ce que** le (poly)isocyanate modifié est de formule suivante :

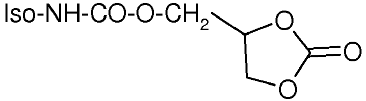

3. Composition selon l'une des revendications 1 ou 2, **caractérisée en ce que** le (poly)isocyanate modifié comporte en outre au moins une autre fonction isocyanate libre.

4. Composition selon l'une des revendications 1 à 3, **caractérisée en ce que** le (poly)isocyanate modifié a au moins une partie de ses fonctions isocyanates, avantageusement au moins 50% des fonctions isocyanates, de préférence au moins 75% des fonctions isocyanates, qui sont modifiées par un composé de formule générale (III) : 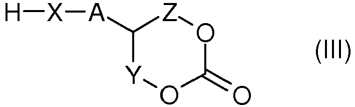 dans laquelle X, A, Y et Z sont tels que définis à la revendication 1.

5. Composition selon l'une des revendications 1 à 4, **caractérisée en ce que** le solvant de formule (II) contient au plus 20 atomes de carbone et **en ce qu'**il présente un point de fusion d'au plus 0°C et un point d'ébullition d'au plus 350°C, ledit solvant de formule (II) étant notamment choisi parmi le 1,1,2,2-tétraéthoxy éthane, le 1,1,2,2-tétraméthoxy éthane, le 2,2-diméthoxy acétate de méthyle et le 2,2-diéthoxy acétate d'éthyle.

6. Composition selon l'une des revendications 1 à 5, **caractérisée en ce qu'**elle comprend entre 5 et 75%, avantageusement entre 5 et 50%, de préférence entre 5 et 30% en poids de (poly)isocyanate modifié par rapport au poids de la composition.

7. Procédé de préparation de la composition selon l'une des revendications 1 à 6 comprenant les étapes suivantes :
- réaction d'un isocyanate, éventuellement polyisocyanate et/ou comportant un groupe choisi parmi les groupes carbamate, urée, biuret, urétidine-dione, isocyanurate, uréthanne, et allophanate avec un composé de formule générale (III), et avec éventuellement au moins un polyol choisi parmi les polyesters et/ou polyéther, en présence du solvant de formule générale (II), et
- éventuellement isolement du produit obtenu.

8. Utilisation de la composition selon l'une des revendications 1 à 4 pour la préparation de revêtements non expansés, notamment de peintures, vernis ou adhésifs.

## Patentansprüche

1. Modifizierte (Poly)isocyanatzusammensetzung, umfassend:
• mindestens ein modifiziertes (Poly)isocyanat der folgenden Formel (I): 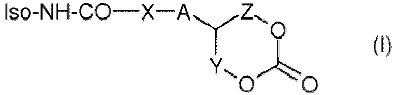 wobei:
- Iso der Rest eines (Poly)isocyanats (nach Umwandlung einer Isocyanatfunktion) ist;
- X ein Sauerstoffatom darstellt;
- A die Gruppe -CH₂- darstellt;
- Y die Gruppe -CH₂- darstellt;
- Z eine einfache kovalente Bindung oder die Gruppe -CH₂- darstellt;
- A nicht mit Y verbunden ist und Z nicht mit Y verbunden ist;
und
• mindestens ein Lösungsmittel der folgenden Formel (II): 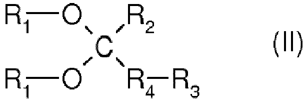 in welcher:
- R₁ eine lineare oder verzweigte C₁-C₄-Alkylgruppe darstellt, wobei die zwei Reste R₁ gleich oder verschieden sein können und auch miteinander verbunden sein können, vorzugsweise über eine lineare oder verzweigte Kohlenwasserstoffkette mit 1 bis 6 Kohlenstoffatomen;
- R₂ H oder eine lineare oder verzweigte C₁-C₄-Alkylgruppe darstellt;
- R₄ eine einfache kovalente Bindung oder eine lineare oder verzweigte Kohlenwasserstoffkette mit 1 bis 6 Kohlenstoffatomen darstellt; vorzugsweise Alkyl;
- R₃ H, C(OR₁)₂R₂, C(O)OR₁, OC(O)R₂, OC(O)OR₁ darstellt.

2. Zusammensetzung nach Anspruch 1, **dadurch gekennzeichnet, dass** das modifizierte (Poly)isocyanat die folgende Formel aufweist:

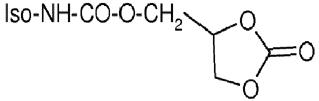

3. Zusammensetzung nach einem der Ansprüche 1 oder 2, **dadurch gekennzeichnet, dass** das modifizierte (Poly)isocyanat außerdem mindestens eine weitere freie Isocyanatfunktion aufweist.

4. Zusammensetzung nach einem der Ansprüche 1 bis 3, **dadurch gekennzeichnet, dass** das modifizierte (Poly)isocyanat mindestens einen Teil seiner Isocyanatfunktionen aufweist, vorteilhafterweise mindestens 50 % der Isocyanatfunktionen, vorzugsweise mindestens 75 % der Isocyanatfunktionen, die durch eine Verbindung der allgemeinen Formel (III) modifiziert sind: 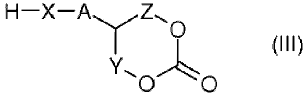 in welcher X, A, Y und Z nach Anspruch 1 sind.

5. Zusammensetzung nach einem der Ansprüche 1 bis 4, **dadurch gekennzeichnet, dass** das Lösungsmittel der Formel (II) höchstens 20 Kohlenstoffatome enthält und dass es einen Schmelzpunkt von höchstens 0 °C und einen Siedepunkt von höchstens 350 °C aufweist, wobei das Lösungsmittel der Formel (II) insbesondere aus 1,1,2,2-Tetraethoxyethan, 1,1,2,2-Tetramethoxyethan, Methyl-2,2-dimethoxyacetat und Ethyl-2,2-diethoxyacetat ausgewählt ist.

6. Zusammensetzung nach einem der Ansprüche 1 bis 5, **dadurch gekennzeichnet, dass** sie zwischen 5 und 75 %, vorteilhafterweise zwischen 5 und 50 %, vorzugsweise zwischen 5 und 30 Gew.-% modifiziertes (Poly)isocyanat im Verhältnis zu dem Gewicht der Zusammensetzung enthält.

7. Verfahren zur Herstellung der Zusammensetzung nach einem der Ansprüche 1 bis 6, umfassend die folgenden Schritte:
- Reaktion eines Isocyanats, gegebenenfalls Polyisocyanats und/oder aufweisend eine Gruppe, ausgewählt aus den Carbamat-, Harnstoff-, Biuret-, Uretidindion-, Isocyanurat-, Urethan- und Allophanatgruppen, mit einer Verbindung der allgemeinen Formel (III) und gegebenenfalls mit mindestens einem Polyol, ausgewählt aus den Polyestern und/oder Polyether bei Vorhandensein des Lösungsmittels der allgemeinen Formel (II), und
- eventuell Isolierung des erhaltenen Produkts.

8. Verwendung der Zusammensetzung nach einem der Ansprüche 1 bis 4 zur Herstellung von nicht expandierten Beschichtungen, insbesondere von Farben, Lacken oder Klebstoffen.

## Claims

1. Composition based on modified (poly)isocyanate, comprising:
• at least one modified (poly)isocyanate of the following formula (I): 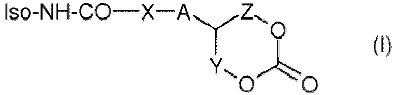 where:
- Iso is a (poly)isocyanate group (after transforming an isocyanate functional group);
- X denotes an oxygen atom;
- A denotes the group -CH₂-;
- Y denotes the group -CH₂-;
- Z denotes a single covalent bond or the group -CH₂-;
- A is not bonded to Y and Z is not bonded to Y;
and
• at least one solvent of the following formula (II): 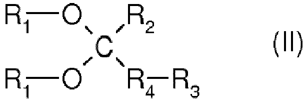 wherein:
- R₁ denotes a straight-chain or branched C₁-C₄ alkyl group, the two groups R₁ optionally being the same or different and optionally also being connected, preferably by means of a straight-chain or branched hydrocarbon chain comprising from 1 to 6 carbon atoms;
- R₂ denotes H or a straight-chain or branched C₁-C₄ alkyl group;
- R₄ denotes a single covalent bond or a straight-chain or branched hydrocarbon chain comprising from 1 to 6 carbon atoms; preferably alkyl;
- R₃ denotes H, C(OR₁)₂R₂, C(O)OR₁, OC(O)R₂, OC(O)OR₁.

2. Composition according to claim 1, **characterised in that** the modified (poly)isocyanate has the following formula:

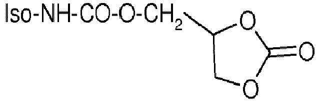

3. Composition according to any of claims 1 or 2, **characterised in that** the modified (poly)isocyanate further comprises at least one additional free isocyanate functional group.

4. Composition according to any of claims 1 to 3, **characterised in that** at least some of the isocyanate functional groups of the modified (poly)isocyanate, advantageously at least 50% of the isocyanate functional groups, preferably at least 75% of the isocyanate functional groups, are modified by a compound of general formula (III): 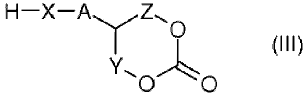 wherein X, A, Y and Z are as defined in claim 1.

5. Composition according to any of claims 1 to 4, **characterised in that** the solvent of formula (II) contains at most 20 carbon atoms and **in that** it has a melting point of at most 0°C and a boiling point of at most 350°C, said solvent of formula (II) in particular being selected from among 1,1,2,2-tetraethoxyethane, 1,1,2,2-tetramethoxyethane, 2,2-dimethoxymethyl acetate and 2,2-diethoxyethyl acetate.

6. Composition according to any of claims 1 to 5, **characterised in that** it comprises between 5 and 75 wt.%, advantageously between 5 and 50 wt.%, preferably between 5 and 30 wt.% modified (poly)isocyanate based on the weight of the composition.

7. Method for preparing the composition according to any of claims 1 to 6, comprising the following steps:
- reacting an isocyanate, possibly polyisocyanate and/or comprising a group selected from among carbamate, urea, biuret, uretidine dione, isocyanurate, urethane and allophanate groups, with a compound of general formula (III), and optionally with at least one polyol selected from among polyesters and/or polyether, in the presence of the solvent of general formula (II), and
- optionally isolating the product obtained.

8. Use of the composition according to any of claims 1 to 4 for preparing non-expanded coatings, in particular paints, varnishes or adhesives.
